# FASCICULE DE BREVET EUROPEEN

(11) **EP 2 847 475 B1**
(45) Date de publication et mention de la délivrance du brevet: **01.06.2016**
(21) Numéro de dépôt: 13719820.6
(22) Date de dépôt: 26.04.2013
(51) Int. Cl.: F16C 1/06, F16C 1/28, B25J 18/00, F16D 3/06, F16H 25/20, B25J 9/10

(54) **BRAS ROBOTISE UTILISANT UN VERIN A MOTEUR DEPORTE UTILISANT UNE TRANSMISSION FLEXIBLE**
ROBOTER MIT EINEM AKTUATOR MIT VERSETZTEM MOTOR MIT FLEXIBLER ÜBERSETZUNG
ROBOTIC ARM USING AN ACTUATOR HAVING AN OFFSET MOTOR USING A FLEXIBLE TRANSMISSION

(30) Priorité: 09.05.2012 FR 1254237
(43) Date de publication de la demande: 18.03.2015
(73) Titulaire: Commissariat à l'Énergie Atomique et aux Énergies Alternatives, 75015 Paris (FR)
(72) Inventeur: GARREC, Philippe, 91190 Gif-sur-Yvette (FR)
(74) Mandataire: Parzy, Benjamin Alain
(86) Numéro de dépôt international: PCT/EP2013/058720
(87) Numéro de publication internationale: WO 2013/167396

(56) Documents cités:
- WO-A1-02/057640
- FR-A- 551 944
- FR-A1- 2 852 265
- US-A- 4 424 045

## Description

L'invention est relative à un bras robotisé utilisant un vérin à câble à moteur déporté utilisant une transmission flexible.

Un bras robotisé selon le préambule de la revendication 1, est connu du document FR 2 852 265 A.

### ARRIERE PLAN DE L'INVENTION

Les transmissions flexibles comportent en général un arbre de transmission flexible qui s'étend dans une gaine également flexible. Les extrémités de l'arbre flexibles sont attelées d'une part à un organe moteur adapté à faire tourner l'arbre, et d'autre part à un organe récepteur qui exploite la rotation de l'arbre flexible. De telles transmissions sont en général utilisées lorsqu'un mouvement relatif est envisagé entre l'organe moteur et l'organe récepteur. Le contact glissant entre l'arbre et la gaine conduit à des frottements de glissement importants et de plus très variable avec le rayon de courbure, même avec utilisation de lubrifiant.

On connaît des transmissions flexibles comportant un arbre flexible s'étendant dans une gaine flexible, l'arbre ayant des extrémités solidaires d'embouts qui sont guidés en rotation par des roulements à billes interposés entre chaque embout et la gaine. L'utilisation de roulements à billes pour guider les extrémités améliore le rendement de l'ensemble, qui reste néanmoins pénalisé par les frottements entre l'arbre et la gaine.

On connaît par ailleurs du document US4424045 une transmission à gaine rigide composée de segments courbes successifs orientables entre eux. La gaine reçoit un arbre flexible qui est guidé par des paliers en matière plastique, par exemple en résine polyimide, disposés à chaque liaison entre deux segments successifs. La gaine rigide ne permet pas de suivre des mouvements entre l'organe moteur et l'organe récepteur. De plus, un frottement de glissement intervient entre les paliers et l'arbre, ce qui conduit encore à un mauvais rendement.

On connait du document FR 551944 des transmissions flexibles destinées à être disposées entre un organe moteur imposant un mouvement de rotation et un organe récepteur recevant le mouvement de rotation via la transmission flexible, de telles transmissions comportant une gaine flexible qui reçoit un arbre flexible avec des paliers à éléments roulants régulièrement interposés entre la gaine flexible et l'arbre flexible pour guider ce dernier en rotation dans la gaine.

Bien entendu, la gaine est suffisamment flexible pour suivre les mouvements relatifs entre l'organe moteur et l'organe récepteur, mais néanmoins suffisamment rigide pour imposer sa courbure à l'arbre flexible au travers des paliers.

La transmission de l'invention combine à la fois flexibilité et un frottement faible (rendement élevé) et régulier, qui dépend très peu du rayon de courbure, ce qui permet une éventuelle compensation par la commande de l'actionneur qui en est équipé. Bien sûr, on fera en sorte d'espacer les paliers de sorte que la portion d'arbre flexible entre deux paliers successifs ne puisse ni conduire à une instabilité statique (par exemple par torsadage), ni entrer dans un mode instable compte tenu de la vitesse de rotation imposée à l'arbre flexible. Inversement, pour un espacement de paliers donné, on déterminera un couple critique et une vitesse de rotation maximale sous lequel les portions d'arbres flexibles ne puissent entrer dans un mode instable, les deux phénomènes pourront conduire à créer des points de contact, donc à une augmentation brutale du frottement entre l'arbre flexible et la gaine flexible.

### OBJET DE L'INVENTION

L'invention a pour objet de proposer un bras robotisé avec un vérin à câble à moteur déporté avec une transmission flexible de rendement amélioré.

### RESUME DE L'INVENTION

L'invention est relative à un bras robotisé selon la revendication 1.

### BREVE DESCRIPTION DES DESSINS

L'invention sera mieux comprise à la lecture de la description qui suit en référence aux figures des dessins annexés parmi lesquels :
- la figure 1 est une vue en coupe schématique d'une transmission flexible utilisable dans le cadre de l'invention ;
- la figure 2 est une vue schématique d'une application de la transmission flexible de la figure 1 à l'actionnement d'un segment de bras robotisé ;

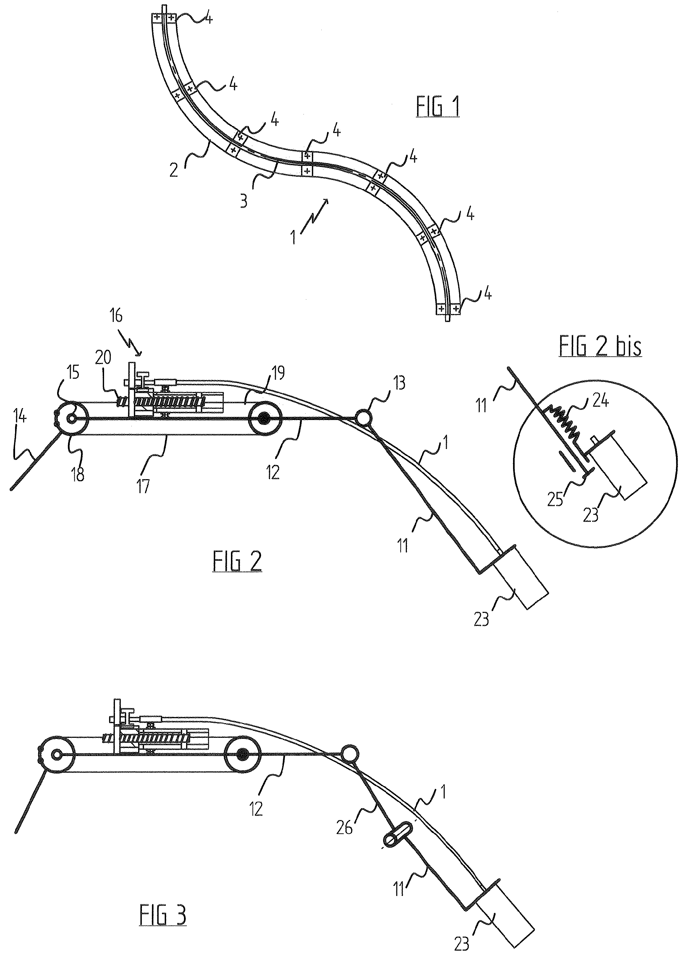

- la figure 2bis est une vue de détail d'un montage possible de l'organe moteur sur le bras robotisé de la figure 2 ;
- la figure 3 est une vue schématique d'une application de la transmission flexible de la figure 1 à l'actionnement d'un segment de bras robotisé ;

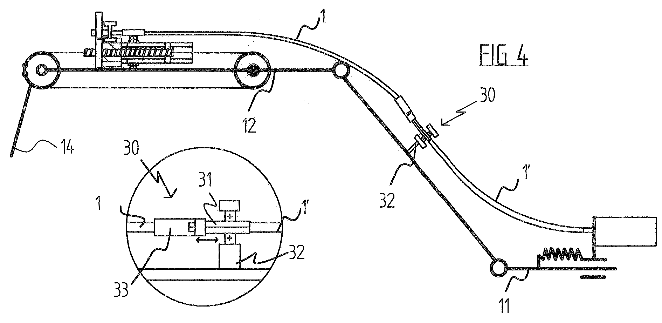

- la figure 4 est une vue schématique d'une autre utilisation de la transmission de l'invention pour l'actionnement d'un segment de bras robotisé, où deux transmissions sont accouplées en série.

### DESCRIPTION DETAILLEE DE L'INVENTION

En référence à la figure 1, la transmission flexible 1 utilisable dans le cadre de l'invention comprend une gaine flexible 2 dans laquelle un arbre flexible 3 s'étend pour tourner. Des paliers à éléments roulants, ici des roulements à billes 4 sont interposés entre l'arbre flexible 3 et la gaine flexible 2 pour guider l'arbre flexible 3 en rotation et l'empêcher de toucher la gaine flexible 2.

L'espacement des paliers est choisi, compte tenu des caractéristiques de rigidité de l'arbre flexible 3 de couple à transmettre et de la vitesse de rotation maximale imposée à l'arbre flexible 3, pour que les portions de l'arbre flexible 3 s'étendant entre deux paliers 4 ne puissent ni se torsader ni entrer dans un mode instable. Selon les besoins, on pourra prévoir de faire saillir les extrémités de l'arbre flexible de la gaine flexible pour les accoupler directement à l'organe moteur et à l'organe récepteur. On pourra encore prévoir de solidariser en rotation les extrémités de l'arbre flexible 3 à des embouts montés tournants aux extrémités de la gaine flexible à l'aide de paliers à éléments roulants.

La figure 2 illustre une application de l'invention à l'actionnement d'un segment de bras robotisé. Le bras robotisé 10 illustré comporte une base 11 sur lequel un premier segment 12 est articulé selon une liaison pivot 13. Un deuxième segment 14 est articulé à l'extrémité du premier segment 12 par une autre liaison pivot 15. Les mouvements du deuxième segment 14 par rapport au premier segment 12 sont actionnés par un vérin à câble 16 qui comporte un câble 17 monté tendu sans fin entre une poulie 18 pivotante selon l'axe de la liaison pivot 15 en étant solidaire du deuxième segment 14 et une poulie de renvoi 19 montée tournante sur le premier segment 12. L'un des brins du câble 17 est solidaire d'une vis 20 qui est déplaçable axialement sous l'effet d'une rotation d'un écrou 21 associé. L'écrou 21 est muni de dents pour son entraînement en rotation par une roue dentée 22 qui est elle-même entrainée par un organe moteur 23 disposé sur la base 11. Une transmission flexible 1 selon l'invention est installée entre l'organe moteur 23 et la roue dentée 22 pour permettre l'entraînement en rotation de la roue dentée 22 par l'organe moteur 23. On remarquera qu'entre l'organe moteur 23 et l'organe récepteur, en l'occurrence la roue dentée 22, des mouvements de pivotement sont autorisés par la liaison pivot 13.

On remarquera que l'organe moteur 23 est rigidement monté sur la base 11. La figure 2bis illustre une variante de montage sur laquelle le moteur 23 est monté libre de se déplacer selon un axe X à l'encontre d'un effort de rappel élastique vers une butée 24. Ce type de montage permet d'accommoder les efforts de tension qui pourraient être imposés à la transmission du fait des mouvements du premier segment 12 relativement à la base 11.

Bien entendu, la partie du bras qui porte l'organe moteur et la partie du bras qui porte l'organe récepteur peuvent être éloignés entre eux de plus d'une articulation, comme dans l'exemple illustré à la figure 3, dans lequel un segment intermédiaire 26 est interposé entre la base 11 et le premier segment 12.

La transmission flexible de l'invention permet de déporter les moteurs en préservant une orientation longiligne de ceux-ci le long de la portion du bras robotisé qui porte les moteurs. En outre, une telle transmission peut être conçue sans jeu de fonctionnement, ce qui améliore la répétabilité de la transmission de mouvement. En outre, l'inertie introduite par une telle transmission est très faible en regard de l'inertie apportée par une transmission à arbre et renvoi d'angle. En outre, une telle transmission est d'un coût faible comparée à des solutions entièrement rigides.

On peut citer divers exemples d'application d'une telle transmission flexible en robotique, comme par exemple l'actionnement d'une phalange d'un doigt d'une main robotisée au moyen d'un vérin à câble disposé dans la paume, le vérin à câble étant lui-même relié à un organe moteur disposé dans l'avant-bras au moyen d'une transmission flexible selon l'invention. On peut encore citer l'actionnement d'une jambe d'un exosquelette inférieur au moyen d'un vérin à câble disposé sur la cuisse, le vérin à câble étant lui-même relié à un organe moteur disposé sur le bassin de l'exosquelette au moyen d'une transmission flexible selon l'invention.

Il peut exister des situations dans lesquelles la distance entre l'organe moteur et l'organe récepteur est telle qu'elle pourrait rendre la transmission flexible instable sous l'action de son poids, ou encore amener la transmission flexible à sortir d'un gabarit donné autour des segments du bras robotisé lors des mouvements de celui-ci. Dans ce cas, on peut bien utiliser des supports solidaires des différents segments du bras robotisé pour guider la transmission flexible et la contraindre à suivre les mouvements des segments du bras robotisé le long desquels la transmission flexible s'étend. Cette disposition impose cependant des contraintes sur la partie courante de la gaine flexible, risquant de provoquer des contacts non désirés entre l'arbre flexible et la gaine flexible.

Selon un mode préféré de mise en oeuvre, on prévoit dans ce cas l'utilisation de plusieurs transmissions flexibles mises en série et reliées entre elles par un organe accouplement fixé au bras robotisé. Ainsi, sur l'exemple illustré à la figure 4, deux transmissions flexibles 1 et 1' sont utilisées pour connecter la roue dentée d'un vérin à câble à un organe moteur. Les deux transmissions flexibles sont reliées à un organe d'accouplement 30 comprenant d'une part un arbre cannelé 31 monté à rotation sur un support 32 solidaire du bras robotisé, et d'autre part une douille cannelée 33 montée sur l'arbre cannelé pour pouvoir coulisser sur ce dernier tout en étant solidaire en rotation de l'arbre cannelé. Ici, l'extrémité de l'arbre flexible de la transmission flexible 1 est accouplé à la douille 33, tandis que l'extrémité de l'arbre flexible de la transmission flexible 1' est accouplé à l'arbre cannelé 31. Ainsi cet accouplement permet de limiter la longueur de chaque transmission flexible utilisée, tout en laissant une liberté axiale pour accommoder les éventuelles tensions pouvant affecter la transmission flexible 1. Par ailleurs, la partie courante de la gaine flexible de chaque transmission flexible n'est soumise à aucune contrainte.

L'invention n'est pas limitée à ce qui vient d'être décrit, mais englobe au contraire toute variante entrant dans le cadre défini par les revendications. En particulier, bien que les paliers de la transmission flexible décrite ici soient des roulements à billes, on pourra utiliser d'autres paliers à éléments roulants, tels que des paliers à aiguilles, du moment que ceux-ci soient compatibles avec la courbure de l'arbre flexible.

Bien qu'ici le vérin à câble utilisant la liaison flexible de l'invention comporte un câble monté tendu sans fin entre deux poulies, on pourra bien entendu utiliser l'invention avec un vérin à effet unilatéral dans lequel le câble passe autour d'une poulie qui définit ainsi un premier brin du câble solidaire d'un des éléments de l'ensemble vis/écrou et un deuxième brin du câble associé à un ressort de rappel de sorte à être tendu par ledit ressort de rappel.

## Revendications

1. Bras robotisé comportant au moins des première, deuxième et troisième parties (11, 12, 14) articulées entre elles, le mouvement de la troisième partie (14) relativement à la deuxième partie (12) étant actionné par un vérin à câble (16) comportant un câble (17) et un ensemble vis/écrou (20, 21) dont l'un des éléments est attelé au câble (17) et l'autre des éléments est entraîné en rotation par un organe moteur (23), de sorte qu'une rotation de l'élément rotatif entraîne un défilement du câble, **caractérisé en ce que** le moteur est relié à l'élément à entraîner par au moins une transmission flexible (1) qui comporte une gaine flexible (2) dans laquelle s'étend un arbre flexible (3), des paliers (4) à éléments roulants étant régulièrement interposés entre la gaine flexible et l'arbre flexible pour guider ce dernier en rotation dans la gaine flexible en évitant tout contact entre arbre et gaine, ledit vérin à câble étant disposé sur la deuxième partie, l'organe moteur (23) du vérin à câble étant disposé sur la première partie (11) et relié au vérin à câble par la transmission flexible (1).

2. Bras robotisé selon la revendication 1, dans lequel sont disposées au moins deux transmissions flexibles (1,1') en série entre l'organe moteur (23) et le vérin à câble (16), les deux transmissions flexibles étant accouplées au moyen d'un organe d'accouplement (30) comportant un arbre cannelé (31) monté tournant sur un support (32), et une douille cannelée (33) montée sur l'arbre cannelé pour y coulisser tout en étant solidaire en rotation de l'arbre cannelé, l'arbre flexible de l'une des transmissions flexibles (1') étant attelé à l'arbre cannelé (31), tandis que l'arbre flexible de l'autre transmission (1) est attelé à la douille (33).

3. Bras robotisé selon la revendication 1 ou 2, dans lequel le câble (17) du vérin à câble (16) est tendu sans fin entre deux poulies (18, 19).

4. Bras robotisé selon la revendication 1 ou 2, dans lequel le câble passe autour d'une poulie qui définit un premier brin du câble attelé à l'un des éléments de l'ensemble vis/écrou et un deuxième brin du câble associé à un ressort de rappel et tendu par ledit ressort de rappel.

## Patentansprüche

1. Vollautomatisierter Arm, umfassend mindestens einen ersten, einen zweiten und einen dritten Teil (11, 12, 14), die aneinander angelenkt sind, wobei die Bewegung des dritten Teils (14) relativ zum zweiten Teil (12) durch eine Seilwinde (16) gesteuert wird, die ein Seil (17) und eine Einheit aus Schraube/Mutter (20, 21) umfasst, von der eines der Elemente an dem Seil (17) befestigt ist und das andere der Elemente von einem Motor (23) drehend angetrieben wird, so dass eine Drehung des drehenden Elements einen Zug des Seils zur Folge hat, **dadurch gekennzeichnet, dass** der Motor mit dem anzutreibenden Element über mindestens eine flexible Transmission (1) verbunden ist, die einen biegsamen Schlauch (2) umfasst, in dem sich eine biegsame Welle (3) erstreckt, wobei Lager (4) mit Rollelementen regelmäßig zwischen dem biegsamen Schlauch und der biegsamen Welle angeordnet sind, um diese letztgenannte drehend in dem biegsamen Schlauch zu führen und dabei jeglichen Kontakt zwischen Welle und Schlauch zu verhindern, wobei die Seilwinde an dem zweiten Teil angeordnet ist, wobei der Motor (23) der Seilwinde an dem ersten Teil (11) angeordnet und mit der Seilwinde über die flexible Transmission (1) verbunden ist.

2. Vollautomatisierter Arm nach Anspruch 1, wobei mindestens zwei flexible Transmissionen (1, 1') in Reihe zwischen dem Motor (23) und der Seilwinde (16) angeordnet sind, wobei die zwei flexiblen Transmissionen mittels eines Kopplungsorgans (30) gekoppelt sind, das eine Keilwelle (31) umfasst, die drehbar auf einem Träger (32) gelagert ist, sowie eine Keilhülse (33), die auf der Keilwelle gelagert ist, um auf ihr zu gleiten, während sie drehfest mit der Keilwelle verbunden ist, wobei die biegsame Welle einer der flexiblen Transmissionen (1') an die Keilwelle (31) gekoppelt ist, während die biegsame Welle der anderen Transmission (1) an die Hülse (33) gekoppelt ist.

3. Vollautomatisierter Arm nach Anspruch 1 oder 2, wobei das Seil (17) der Seilwinde (16) endlos zwischen zwei Rollen (18, 19) gehalten wird.

4. Vollautomatisierter Arm nach Anspruch 1 oder 2, wobei das Seil um eine Rolle läuft, die einen ersten Strang des Seils definiert, der an eines der Elemente der Einheit aus Schraube/Mutter gekoppelt ist, sowie einen zweiten Strang des Seils, der mit einer Rückstellfeder verbunden ist und von der genannten Rückstellfeder gespannt wird.

## Claims

1. A robotized arm comprising at least first, second and third parts (11, 12, 14) articulated to one another, the movement of the third part (14) relative to the second part (12) being actuated by a cable cylinder (15) comprising a cable (17) and a screw/nut assembly (20, 21), of which one of the elements is attached to the cable (17) and the other of the elements is driven in rotation by a motor component (23), so that rotation of the rotary element leads to movement of the cable, **characterized in that** the motor is connected to the element to be driven by at least one flexible transmission (1) which comprises a flexible sheath (2) in which a flexible shaft (3) extends, rolling-element bearings (4) being regularly interposed between the flexible sheath and the flexible shaft in order to guide the latter in rotation in the flexible sheath while avoiding any contact between the shaft and the sheath, said cable cylinder being arranged on the second part, the motor component (23) of the cable cylinder being arranged on the first part (11) and connected to the cable cylinder by the flexible transmission (1).

2. The robotized arm as claimed in claim 1, wherein at least two flexible transmissions (1, 1') are arranged in series between the motor component (23) and the cable cylinder (16), the two flexible transmissions being coupled by means of a coupling component (30) comprising a splined shaft (31) mounted so as to rotate on a support (32), and a splined bushing (33) mounted on the splined shaft in order to slide therein while being linked in rotation with the splined shaft, the flexible shaft of one of the flexible transmissions (1') being attached to the splined shaft (31), while the flexible shaft of the other transmission (1) is attached to the bushing (33).

3. The robotized arm as claimed in claim 1 or 2, wherein the cable (17) of the cable cylinder (16) is tensioned endlessly between two pulleys (18, 19).

4. The robotized arm as claimed in claim 1 or 2, wherein the cable passes around a pulley which defines a first strand of the cable, attached to one of the elements of the screw/nut assembly, and a second strand of the cable associated with a return spring and tensioned by said return spring.
